Europäisches Patentamt

European Patent Office

Office européen des brevets

(11) Veröffentlichungsnummer: **0 190 760**
**A1**

# EUROPÄISCHE PATENTANMELDUNG

(21) Anmeldenummer: 86101555.0

(22) Anmeldetag: 06.02.86

(51) Int. Cl.⁴: **F15B 15/08** , F15B 15/26

(30) Priorität: 08.02.85 DE 3504269

(43) Veröffentlichungstag der Anmeldung:
13.08.86 Patentblatt 86/33

(84) Benannte Vertragsstaaten:
AT BE CH DE FR GB IT LI LU NL SE

(71) Anmelder: ORIGA GmbH Pneumatik
Mühlwiesenstrasse 26
D-7024 Filderstadt 1(DE)

(72) Erfinder: Der weitere Erfinder hat auf seine Nennung
verzichtet

(74) Vertreter: Patentanwälte Ruff und Beier
Neckarstrasse 50
D-7000 Stuttgart 1(DE)

(54) Druckmittelzylinder.

(57) Ein Druckmittelzylinder mit mindestens einem in Längsrichtung geschlitzten Rohr und einem in diesem eingesetzten Kolben 19 weist einen Kraftabnahmeansatz 24 auf, der durch den Längsschlitz 16 hindurchgreift. An der Außenseite des Gehäuses 11 sind an dem Kraftabnahmeansatz 24 zwei Bremselemente 33 befestigt, die eine Bremsfläche 37 aufweisen, die sich gegen die Außenseite des Rohres anlegen läßt. Dadurch wird das Rohr in diesem Bereich zwischen dem Kolben 19 von innen her und dem Bremselement 33 von außen her eingeklemmt, was zu einer guten Bremswirkung führt.

EP 0 190 760 A1

Druckmittelzylinder

Die Erfindung betrifft einen Druckmittelzylinder mit einem mindestens einen abgedichteten Längsschlitz aufweisenden endseitig verschlossenen rohrartigen Gehäuse, in dessen mindestens einem zylindrischem Innenraum ein abgedichteter Kolben längs verschiebbar geführt ist, der mit einem sich durch den Längsschlitz hindurch erstreckenden Kraftabnahmeansatz verbunden ist, an dem außerhalb des Gehäuses mindestens ein Bremselement angeordnet ist.

Bei einem bekannten Druckmittelzylinder dieser Art - (DE-A 33 28 292) ist an dem Kraftabnahmeelement eine Halterung befestigt, die die eigentliche Bremseinrichtung trägt. Die Bremseinrichtung wirkt auf ein parallel zum Gehäuse angeordnetes Profil beidseitig ein. Diese Anordnung macht den Aufbau insgesamt sperrig. Darüber hinaus ist aufgrund des relativ großen Abstandes zwischen dem Kraftabnahmeelement und dem Profil die Bremswirkung am Kraftabnahmeelement nicht einwandfrei. Der Aufbau ist aufwendig und es muß ggf. ein Schutz vorhanden sein.

Bei Druckmittelzylindern der eingangs genannten Art ist es ebenfalls bekannt (US-A 3 871 267), ein Bremselement im Innern des Zylinders anzuordnen. Dies hat zwar den Vorteil, daß die Anordnung an der Außenseite nicht sperrig ist, jedoch muß zur Erzielung einer flächigen Anlage des Bremselementes der Querschnitt des Innenraums des Gehäuses rechteckig sein. Darüber hinaus wirkt der beim Bremsen ggf. entstehende Abrieb im Innern des Zylinders, so daß er zu Funktionsschwierigkeiten führen kann. Darüber hinaus kann eine Bremsung im Innern des Zylinders im Sinne einer Aufweitung auf den Zylinder einwirken, was ebenfalls unerwünscht ist.

Der Erfindung liegt die Aufgabe zugrunde, einen Druckmittelzylinder der eingangs genannten Art derart weiter zu verbessern, daß bei konstruktiv einfachem Aufbau ein sicheres Bremsen bzw. Festhalten des Kolbens in seiner Stellung auch unter ungünstigen Bedingungen gewährleistet ist, ohne daß das rohrartige Gehäuse unnötigen Belastungen ausgesetzt wird. Insbesondere soll es möglich sein, den Kolben und eine mit diesem verbundene Last an allen möglichen Positionen innerhalb des Bewegungsweges festzuhalten.

Zur Lösung dieser Aufgabe schlägt die Erfindung vor, daß das Bremselement in Richtung auf die Oberfläche des Gehäuses bewegbar und mit einer Bremsfläche gegen die Außenseite des Gehäuses anpreßbar ausgebildet ist.

Das Anpressen der Bremsfläche mit Hilfe des gegenüber dem Kolben bewegbaren Bremselementes führt dazu, daß das Gehäuse von seiner Innenseite her durch den Kolben und von seiner Außenseite her durch die Bremsfläche beaufschlagt wird. Kolben und äußeres Bremselement wirken ähnlich einer Scheibenbremse auf den dazwischen liegenden Bereich des rohrartigen Gehäuses, das demnach die Funktion der Bremsscheibe übernimmt. Diese Art der Bremsung hat den großen Vorteil, daß auf das rohrartige Gehäuse keine es aufweitende Kräfte einwirken können, die zu einer Verschlechterung der Führung und/oder der Abdichtung führen könnten. Die Erfindung bietet somit eine Sicherheit gegen unkontrollierte Bewegungen bei Druckausfall oder "Not-aus". Zugleich werden die kleinen Bewegungen vermieden, die aufgrund der Kompressibilität des Druckmittels dann entstehen, wenn sich beim Stillstand in einer Zwischenposition die Größe der Belastung ändert.

Die Erfindung sieht in Weiterbildung vor, daß das Bremselement unter Federwirkung anpreßbar und unter dem Einfluß eines Druckmittels lösbar sein kann. Diese Ausgestaltung hat den großen Vorteil, daß bei Ausfall des Druckmittelsystems zwangsläufig eine Bremsung eintritt. Dabei kann das Druckmittel ein von dem zum Betrieb des Druckmittelzylinders verwendeten Druckmittel verschiedenes Druckmittel sein. Es ist jedoch besonders günstig, wenn das Bremselement unter dem Einfluß des den Kolben antreibenden Druckmittels lösbar ist. Dann braucht nur ein einziges Druckmittelsystem vorhanden zu sein. Das Druckmittel kann beispielsweise über externe Leitungen dem Kraftabnahmeansatz zur Betätigung des Bremselementes zugeführt werden. Besonders günstig ist es jedoch, wenn das Druckmittel durch das Innere des Kolbens geführt ist. In diesem Fall brauchen keine äußeren Leitungen vorhanden zu sein, was den Aufbau des Druckmittelzylinders vereinfacht. Es kann dabei beispielsweise vorgesehen sein, von beiden Stirnseiten des Kolbens je eine Leitung über ein Logikventil zur Betätigung der Bremseinrichtung derart zu verwenden, daß dann, wenn auf beiden Seiten des Kolbens gleicher Druck herrscht, kein Druckmittel für das Bremselement zur Verfügung gestellt wird. Das Druckmittel gelangt nur dann zum Bremselement, wenn auf beiden Seiten des Kolbens unterschiedlicher Druck herrscht. Dies ist nämlich ein Zeichen dafür, daß der Kolben bewegt werden soll. Wenn aufgrund eines Fehlers der Druck zwar unterschiedlich ist, jedoch nicht seine normale Stärke erreicht, kann auf diese Weise auch erreicht werden, daß die Bremse nicht gelöst wird. Denn in diesem Fall ist der im System zur Verfügung stehende Druck, der der Bremseinrichtung zur Lösung zugeführt wird, nicht ausreichend.

Die Erfindung schlägt weiterhin vor, daß zur Betätigung des Bremselementes ein Druckkolben vorgesehen sein kann. Durch entsprechende Dimensionierung des Druckkolbens lassen sich die zum Lösen der Bremse erforderlichen Kräfte bereitstellen.

Besonders günstig ist es, wenn der Druckkolben mit einem bewegbaren Keil verbunden ist, der mit einer Fläche an einem Element des Bremselementes zu dessen Bewegung angreift. Aufgrund der Verwendung eines Keils läßt sich mechanisch eine sehr wirkungsvolle Untersetzung herstellen, die auch starke Anpresskräfte der verwendeten Federn überwinden kann. Zur Verhinderung einer Selbsthemmung kann dabei vorgesehen sein, daß das Bremselement eine drehbar gelagerte Rolle oder Walze aufweist, an der der Keil angreift. Es findet dann also keine Gleitreibung, sondern eine Rollreibung statt.

Diese Maßnahme zur Verminderung der Reibung wird noch dadurch unterstützt, daß mit Vorteil der mit dem Druckkolben verbundene Keil rollengeführt sein kann.

Zur Erzielung einer besonders günstigen Bremswirkung kann vorgesehen sein, daß die Bremsfläche des Bremselementes etwa radial bezüglich des Gehäuses bzw. Kolbens bewegt wird. Dadurch wird auch eine gleichmäßige und symmetrische Kraftverteilung erreicht.

In Weiterbildung der Erfindung kann vorgesehen sein, daß das Bremselement schwenkbar an dem Ansatz gelagert ist. Bei entsprechender Dimensionierung des schwenkbaren Bremselementes kann ohne weiteres dafür gesorgt werden, daß die Bremsfläche etwa senkrecht zur Oberfläche des Gehäuses bewegt wird. Die Schwenkbarkeit hat natürlich den Vorteil, daß hierbei nur eine geringe Reibung auftritt.

Es ist jedoch ebenfalls möglich, wie von der Erfindung ebenfalls vorgeschlagen wird, daß das Bremselement radial verschiebbar geführt ist. So ist es beispielsweise bei entsprechend großer Dimensionierung . des Druckkolbens möglich, den Druckkolben direkt auf das Bremselement einwirken zu lassen.

Die Erfindung schlägt weiterhin vor, daß die Bremsfläche an einem den Längsschlitz des Gehäuses von außen abdichtenden Dichtband angreift. Dieses Dichtband ist bei den bekannten Druckmittelzylindern in der Regel so gehaltert, daß es eine ebene Oberfläche aufweist. Dadurch wird gewährleistet, daß die Bremsfläche vollflächig aufliegt. Darüber hinaus kann für den Fall, daß Abnutzungserscheinungen aufgrund von Bremsvorgängen auftreten, das Dichtband relativ leicht gegen ein neues ausgetauscht werden.

Es ist jedoch auch möglich, daß die Bremsfläche auf der Oberfläche des Gehäuses, beispielsweise zu beiden Seiten des Längsschlitzes bzw. Dichtbandes, angreift. In diesem Fall kann dafür gesorgt werden, daß die geometrische Form der Bremsfläche mit der Oberfläche des Gehäuses im Querschnitt übereinstimmt.

Ebenfalls mit Vorteil möglich ist es, auf der Außenseite des Gehäuses ein Band vorzugsweise austauschbar zu befestigen, an dem die Bremse angreifen kann. Dieses Band kann beispielsweise angeschraubt sein.

Die Erfindung sieht vor, daß das Bremselement im Bereich eines Endes des Kraftabnahmeansatzes angeordnet sein kann. In diesem Bereich läßt sich das Bremselement besonders einfach auch bei bestehenden Systemen unterbringen.

Besonders günstig ist es, wenn zwei symmetrisch angeordnete und symmetrisch ausgebildete Bremselemente vorhanden sind.

Da bei den bekannten Druckmittelzylindern die Kolben im Bereich ihrer Enden verbreitert sind und nur in diesen verbreiterten Bereichen an der Innenseite des Gehäuses anliegen, schlägt die Erfindung weiterhin vor, daß die Bremsfläche des Bremselementes im Bereich dieser verbreiterten Endbereiche des Kolbens angeordnet ist. Dies führt dazu, daß die Anpreßkräfte auf der Außenseite und Innenseite des Gehäuses an der gleichen Stelle auftreten, so daß das Gehäuse keinen zusätzlichen Biegemomenten unterworfen wird.

Besonders günstig ist es, wenn die zum Anpressen des Bremselementes verwendeten Federn Tellerfedern sind. Diese bringen bei geringen Bauhöhen und geringen Bewegungswegen sehr hohe Kräfte auf.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:

Fig. 1 eine teilweise geschnittene abgebrochene Seitenansicht einer Druckmittelzylinderanordnung nach der Erfindung;

Fig. 2 einen Querschnitt etwa längs Linie II-II in Fig. 1;

Fig. 3 eine der Fig. 1 entsprechende Darstellung bei gelöster Bremse;

Fig. 4 eine der Fig. 1 ähnliche Ansicht einer weiteren Ausführungsform im Längsschnitt;

Fig. 5 einen Querschnitt durch ein der Fig. 4 entsprechenden Antrieb mit einem Doppelkolben;

Fig. 6 die Aufsicht auf die Anordnung in Fig. 5.

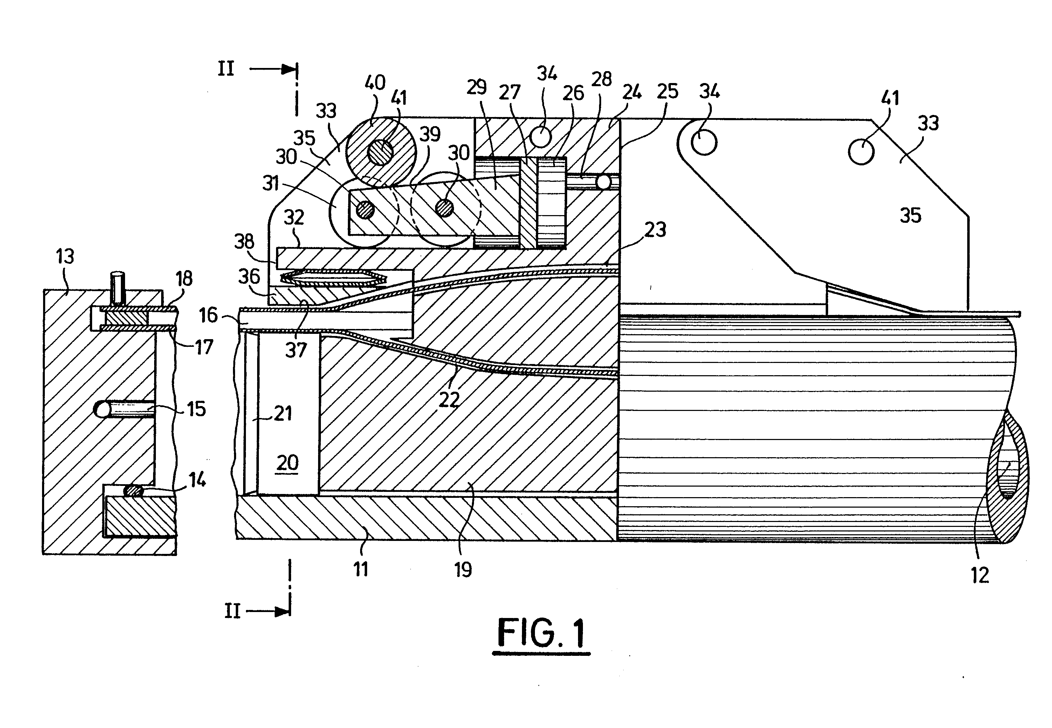

Fig. 1 zeigt stark vereinfacht den Längsschnitt durch ein rohrartiges Gehäuse 11, dessen Außenumfang kreiszylindrisch ausgebildet ist. Im Inneren des Gehäuses 11 ist ein ebenfalls kreiszylindrischer Innenraum 12 vorhanden, wobei der Innenraum 12 exzentrisch gegenüber dem Gehäuse 11 angeordnet ist. An seinem in Fig. 1 linken Ende ist das Gehäuse 11 durch einen Abschlußblock 13 abgeschlossen, wobei zwischen Abschlußblock 13 und dem Gehäuse 11 eine umlaufende Dichtung 14 eingesetzt ist. Durch den Abschlußblock 13 führt eine Bohrung 15 zur Einführung von Druckmitteln, beispielsweise Druckluft.

Das Gehäuse 11 enthält einen in Fig. 1 an der oberen Seite angeordneten Längsschlitz 16, der sich von dem in Fig. 1 linken Ende bis zu dem in Fig. 1 nicht dargestellten rechten Ende erstreckt. Das rechte Ende ist in ähnlicher Weise durch einen Abschlußblock abgeschlossen wie das linke Ende. Der Längsschlitz 16 wird auf der Innenseite des Gehäuses 11 durch ein inneres Dichtband 17 und auf seiner äußeren Seite durch ein äußeres Dichtband 18 abgeschlossen.

Im Innenraum 12 des Gehäuses 11 ist ein Kolben 19 angeordnet, der in seinen Endbereichen einen verbreiterten Abschnitt 20 aufweist. Der Abschnitt 20 entspricht in seinem Außendurchmesser etwa dem Innendurchmesser des Innenraums 12, so daß der Kolben 19 mit Hilfe der verbreiterten Abschnitte 20 im Innenraum 12 längsverschiebbar geführt ist. Zur Abdichtung können an den beiden Stirnseiten des Kolbens 19 noch Dichtungen angeordnet sein, die bei 21 angedeutet sind. Das innere Dichtband 17 ist durch einen in das Innere des Kolbens 19 hineingeführten Durchgang 22 geführt, während das äußere Dichtband 18 durch einen ähnlich ausgebildeten Durchgang 23 hindurchgeführt ist, der außerhalb des Gehäuses 11 in einem Kraftabnahmeansatz 24 angeordnet ist, der mit dem Kolben 19 verbunden ist.

Die beiden Dichtbänder 17, 18 dichten den Längsschlitz 16 nach außen zu beiden Seiten des Kolbens ab, während sie im Bereich des Kolbens von dem Längsschlitz 16 weggeführt sind, so daß der Kraftabnahmeansatz 24 durch den Längsschlitz 16 hindurchgreifen kann.

Der Kraftabnahmeansatz 24 ist symmetrisch bezüglich seiner Mittellinie 25 ausgebildet. Er enthält zwei im Querschnitt kreisförmige Hohlräume 26, in denen je ein Kolben 27 geführt ist. Mit dem Hohlraum 26 steht eine Bohrung 28 im Ansatz 24 in Verbindung. Der Kolben 27 weist auf seiner Außenseite einen Keilansatz 29 auf, der bei Bewegung des Kolbens 27 mitbewegt wird. Der Keil 29 enthält zwei Wellen 30, auf denen je zwei Rollen 31 gelagert sind. Die Rollen 31 laufen auf einer in Längsrichtung des Gehäuses 11 und parallel zu diesem verlaufenden Bahn 32. Wird in den Hohlraum 26 des Druckkolbens 27 über die Bohrung 28 Druckmittel eingegeben, so wird der Keil 29 nach links in Fig. 1, d.h. in Richtung auf das Stirnende des Kraftabnahmeansatzes 24 verschoben, wobei seine vier Rollen 31 auf der Bahn 32 abrollen.

An dem Kraftabnahmeansatz 24 sind zwei Bremselemente 33 schwenkbar mit Hilfe je eines Zapfens 34 gelagert. Die Bremselemente enthalten je zwei etwa radial zum Gehäuse 11 verlaufende seitliche Platten 35, die auf ihrer dem Gehäuse zugewandten Seite durch einen Quersteg 36 miteinander verbunden sind. Der Quersteg 36 ist zwischen der Unterseite der Bahn 32 und der Oberseite des Gehäuses 11 angeordnet. Bei Verschwenkung des in Fig. 1 linken Bremselementes 33 im Uhrzeigersinn wird der Quersteg 36 von der Oberseite des äußeren Dichtbandes 18 abgehoben, während bei Verschwenkung im Gegenuhrzeigersinn der Quersteg 36 auf das äußere Dichtband 18 zubewegt wird. An seiner Unterseite bildet der Quersteg 36 eine Bremsfläche 37, die mit Hilfe eines Tellerfederpaketes 38 gegen die Oberseite des äußeren Dichtbandes 18 anpreßbar ist.

Der Keil 29 bildet an seiner Oberseite eine Keilfläche 39. An dieser Keilfläche 39 liegt eine weitere Walze 40 an, die drehbar zwischen den Platten 35 des Bremselementes 33 mit Hilfe einer Welle 41 gelagert ist.

Das Tellerfederpaket 38 drückt den Quersteg 36 mit seiner Bremsfläche 37 auf die Oberseite des äußeren Dichtbandes 18.

Dabei wird durch den Druck der Walze 40 auf die Keilfläche 39 des Keiles 29 dieser nach rechts verschoben, sofern im Hohlraum 26 kein Druck herrscht. Dies bedeutet, daß die durch das Bremselement 33 gebildete Bremse wirkt. Wird nun in den Hohlraum 26 Druck gegeben, so wird der Druckkolben 27 und der Keil 29 nach links verschoben, so daß die Walze 40 auf der Keilfläche 39 abrollt und das Bremselement 33 derart verschwenkt, daß die Bremsfläche 37 von dem Dichtband 18 abgehoben wird. Die Bremse ist also gelöst.

Die Bremsfläche 37 liegt an der Außenseite des Gehäuses bzw. des Dichtbandes 18 in dem gleichen axialen Bereich an, in dem im Innenraum 12 der verbreiterte Abschnitt 20 des Kolbens 19 an der Innenseite anliegt. Dies gilt für beide Enden des Kraftabnahmeansatzes 24 bzw. beide Enden des Kolbens 19, so daß auf das Zylindergehäuse 11 keine Biegemomente ausgeübt werden. Das Bremsen geschieht dadurch, daß das Gehäuse mit den Dichtbändern 17, 18 zangenartig von außen und innen ergriffen wird.

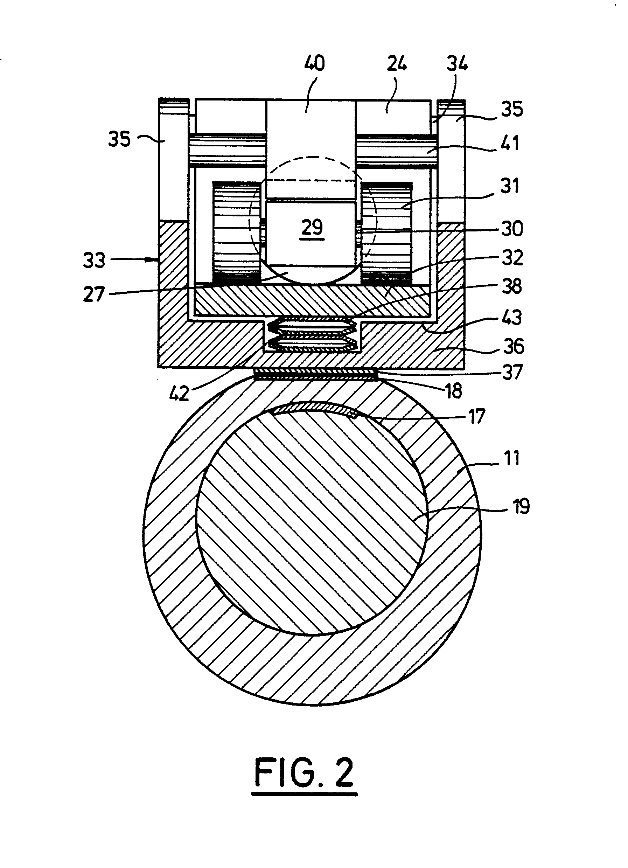

Fig. 2 zeigt nun einen Querschnitt durch die Anordnung in Fig. 1. Es ist zu sehen, daß an dem Kraftabnahmeansatz 24 zu beiden Seiten die Platten 35 mit Hilfe des Zapfens 34 schwenkbar gelagert sind. Die beiden Platten sind an ihrer Unterseite durch den bereits erwähnten Quersteg 36 miteinander verbunden. Der Quersteg 36 weist eine Ausnehmung 42 zur Aufnahme der Tellerfedern 38 auf. Der Quersteg 36 liegt mit seiner Oberseite 43 unterhalb der Bahn 32 für die insgesamt vier Rollen 31, die an dem Keilansatz 29 gelagert sind. Die Rollen 31 rollen also auf der Bahn 32, wobei auf jeder Seite des Keilansatzes 29 je zwei Rollen 31 angeordnet sind. Dies führt zu einer sehr stabilen Ausbildung der Anordnung.

Auf der Keilfläche 39 rollt die Walze 40 ab, die mit Hilfe der Welle 41 zwischen den beiden Platten 35 des Bremselementes 33 gelagert ist. Der Druckkolben 27 weist einen kreisrunden Querschnitt auf.

An der Unterseite des Quersteges 36 ist eine die Bremsfläche 37 bildende Auflage angebracht, die in ihrer Breite und Anordnung dem äußeren Dichtband 18 entspricht. Die Tellerfedern 38 drücken den Quersteg 36 in Richtung auf den Kolben 19, so daß die Bremsfläche 37 zur Auflage auf dem äußeren Dichtband 18 gelangt und dort aufgrund der großen Kraft der Tellerfedern 38 eine sichere Festlegung des Kolbens 19 gegenüber dem Gehäuse 11 in Axialrichtung bewirkt. Das Gehäuse 11 wird durch die aufgewandte Kraft der Tellerfedern 38 zwischen der Bremsfläche 37 und der diesem Bereich zugewandten Seite des Kolbens 19 eingeklemmt, ohne daß eine Kraft wirksam wird, die das Gehäuse 11 beispielsweise aufweiten würde.

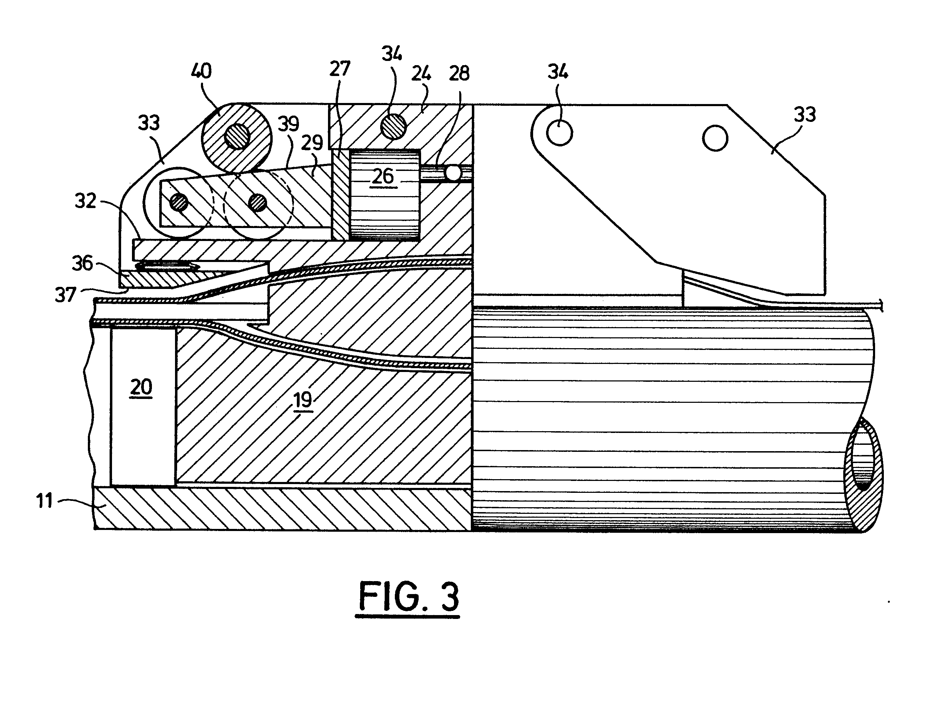

Fig. 3 zeigt in vereinfachter Ansicht die Anordnung nach Fig. 1 bei gelöster Bremse. Zum Lösen der Bremse wird Druck über die Bohrung 28 in den Hohlraum 26 gegeben, so daß der Kolben 27 mit dem daran befestigten Keil 29 auf der Bahn 32 in Richtung auf das Ende des Kraftabnahmeansatzes 24 gleitet. Aufgrund der schwach geneigten Keilfläche 39 des Keiles 29 führt das Abrollen der Walze 40 zu einer leichten Verschwenkung des linken Bremselementes 33 im Uhrzeigersinn und des rechten Bremselementes 33 im Gegenuhrzeigersinn um den jeweiligen Zapfen 34. Diese Verschwenkung hebt den Quersteg 36 und damit dessen untere Bremsfläche 37 von dem äußeren Dichtband 18 ab, so daß nunmehr das Gehäuse 11 in diesem Bereich nicht mehr eingeklemmt wird und der Kolben 19 sich in Längsrichtung bewegen kann.

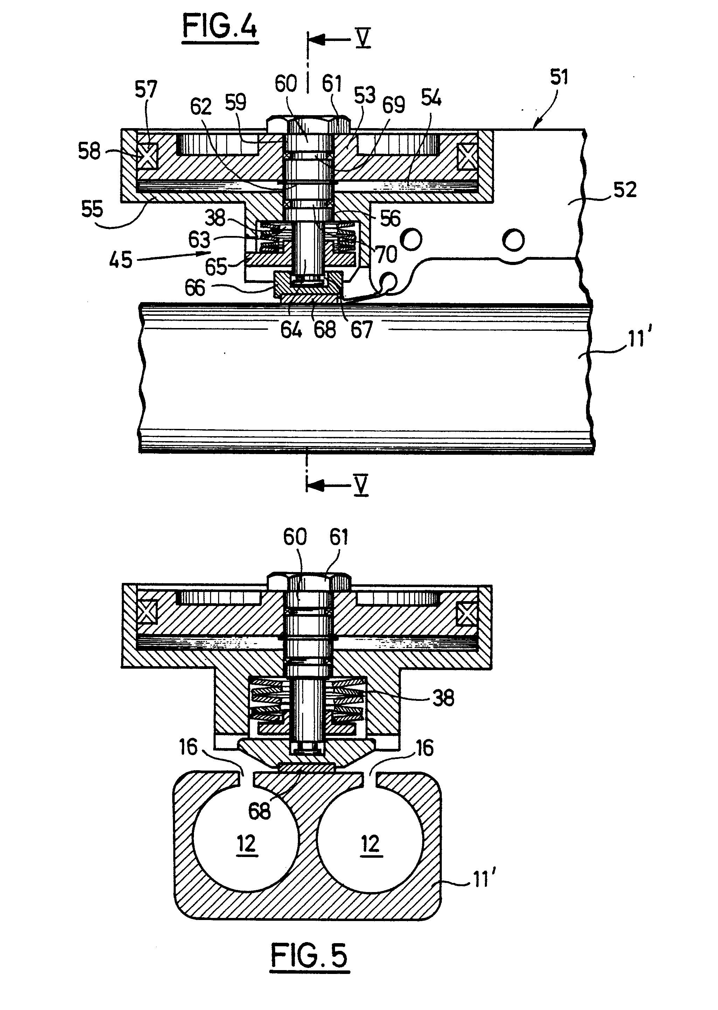

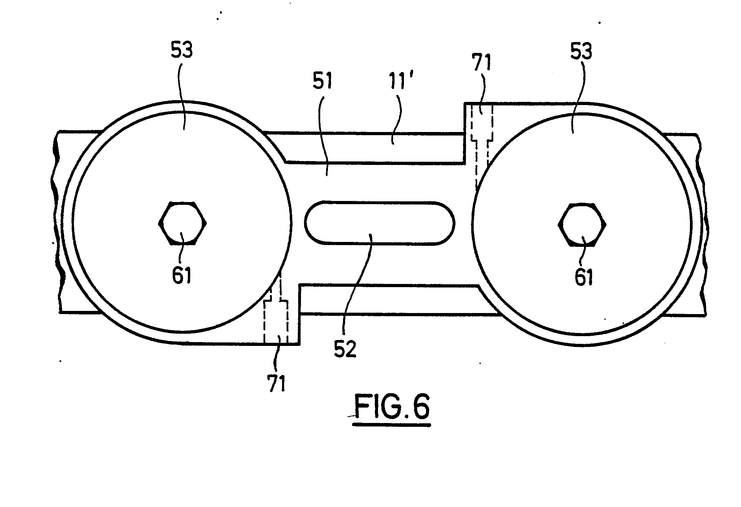

Die Ausführungsform nach den Fig. 4 bis 6 ist zwar in ihrer Anwendung bei einem Doppelrohr beschrieben, sie kann jedoch in gleicher Weise auch bei einem Rohr mit nur einem zylindrischen Innenraum verwendet werden. Wie sich aus Fig. 6 ergibt, die eine Aufsicht auf die Anordnung darstellt, ist für die Bremselemente ein Bauteil 51 vorhanden, das einen zentralen Schlitz 52 aufweist. Dadurch läßt sich das Bauteil 51 an dem Kraftabnahmeansatz einfach anbringen. Das punktsymmetrisch ausgebildete Bauteil 51 weist an jedem seiner Enden, d.h. in Fig. 6 rechts und links, je einen Bremskolben 53 auf, dessen Aufbau in Fig. 4 im einzelnen beschrieben ist.

In Fig. 4 ist nur das eine Ende des Bauteils 51 dargestellt. Von oben her weist das Bauteil in seinem Endbereich eine flachzylindrische Ausnehmung 54 auf, deren Mittelachse etwa radial bezüglich des Gehäuses 11' verläuft. Nach oben ist die Ausnehmung 54 offen, während sie in Richtung auf das Gehäuse 11' durch einen Boden 55 abgeschlossen ist. Mittig im Boden 55 ist eine Bohrung 56 angeordnet.

In der Ausnehmung 54 verschiebbar ist der Bremskolben 53 angeordnet, der an seinem Umfang eine Ringnut 57 zur Aufnahme einer Dichtung 58 aufweist. Der Bremskolben 53 weist eine mit der Bohrung 56 des Boden 55 der Ausnehmung 54 fluchtende Bohrung 59 auf. Durch die beiden Bohrungen 56 und 59 erstreckt sich ein Bolzen 60, der oberhalb des Bremskolbens 53 einen verbreiterten Kopf 61 aufweist. Unmittelbar unterhalb des Bremskolbens 53 weist der Bolzen 60 einen Sprengring 62 auf.

Auf der dem Gehäuse 11' zugewandten Seite des Bodens 55 ist eine Ausnehmung 63 vorhanden, die von einem Ansatz 64 des Bolzens 60 mit verringertem Durchmesser durchsetzt ist. An dem Ansatz 64 ist unverrückbar eine Spannplatte 65 befestigt. In dem Teil der Ausnehmung 63 zwischen dem Boden 55 der Ausnehmung 54 und der Spannplatte 65 ist ein Tellerfederpaket 38 eingesetzt, das die Spannplatte 65 und damit den Bolzen 60 in Richtung auf das Gehäuse 11' beaufschlagt. Aufgrund des verbreiterten Kopfes 61 wird der Druckkolben 53 mitgenommen.

Der Ansatz 64 ragt etwas über die dem Gehäuse 11' zugewandte Seite der Spannplatte 65 hinaus. Er greift dort in eine Ausnehmung 67 eines Bremsbalkens 66 ein. Dieser Bremsbalken 66 weist auf seiner dem Gehäuse zugewandten Seite einen Bremsbelag 68 auf. Das Tellerfederpaket 38 drückt daher mit Hilfe des Ansatzes 64 und der Spannplatte 65 den Bremsbalken 66 derart in Richtung auf das Gehäuse 11', daß der Bremsbelag 68 an der Oberseite des Gehäuses 11' oder dem dort vorhandenen Dichtband anliegt. Die Bremsung wird dadurch bewirkt, daß das Gehäuse von außen durch den Bremsbalken und von innen durch den Kolben beaufschlagt wird, so daß es in diesem Bereich nach Art einer Scheibenbremse von einer durch den Bremsbalken und den Kolben gebildeten Bremszange eingeklemmt wird.

Die Bremse wird dadurch gelöst, daß in die flachzylindrische Ausnehmung 54 zwischen ihrem Boden und der Unterseite des Druckkolbens 53 ein Druckmittel unter einem Druck eingebracht wird, der ausreicht, eine Kraft zu erzeugen, die größer ist als die Kraft der Tellerfedem 38. Bei Lösen der Bremse wird der Bremsbalken, der durch einen aus Gründen der Vereinfachung nicht dargestellten Sprengring an dem Ansatz 64 festgelegt ist, abgehoben. Dies Abheben könnte auch mit Hilfe einer äußeren Blattfeder geschehen.

Zur Abdichtung des Bolzen 60 sowohl in der Bohrung 56 als auch in der Bohrung 59 weist dieser jeweils eine Ringnut 69, 70 auf, in die eine Ringdichtung eingesetzt werden kann.

Das Druckmittel wird in die flachzylindrische Ausnehmung 54 beispielsweise durch seitliche Bohrungen 71 angebracht, die in Fig. 6 zu sehen sind. Es ist selbstverständlich wie bei der Ausführungsform nach Fig. 1 bis 3 erwähnt, auch möglich, das Druckmittel durch das Innere des Kraftabnahmeansatzes in die Ausnehmung zu bringen, so daß das Druckmittel direkt aus dem Inneren des Gehäuses 11 bzw. 11' entnommen werden kann.

Wie sich aus der Fig. 5, die einen Schnitt etwa längs Linie V-V in Fig. 4 zeigt, ergibt, wirkt der Bremsbelag 68 im Bereich zwischen den beiden Längsschlitzen 16 des Gehäuses 11' ein. Das Gehäuse 11' weist bei diesem Ausführungsbeispiel zwei in Längsrichtung verlaufende Innenräume 12 auf, so daß auch zwei Längsschlitze 16 vorhanden sind. Das Einwirken des Bremsbelages 68 mittig zwischen den beiden Längsschlitzen 16 hat den Vorteil, daß das Gehäuse gleichmäßig belastet wird. Es kann an dieser Stelle auch ein Band an dem Gehäuse befestigt werden, an dem die Bremsfläche angreift.

Die von der Erfindung vorgeschlagene Bremseinrichtung, die insbesondere als Feststellbremse dienen soll, hat den großen Vorteil, daß es möglich ist, die Bremskraft durch Änderung der Vorspannung der Tellerfedern oder Auswechseln der Tellerfedern mechanisch einzustellen. Ein weiterer Vorteil liegt darin, daß aufgrund des relativ kleinen Verstellweges die Federkraft im Verstellbereich im wesentlichen konstant bleibt. Dies hat die gleiche Wirkung wie eine Nachstellung der Bremse, so daß die Wirkung einer Selbstnachstellung erreicht wird.

**Ansprüche**

1. Druckmittelzylinder mit einem mindestens einen abgedichteten Längsschlitz (16) aufweisenden endseitig verschlossenen rohrartigen Gehäuse (11), in dessen mindetens einem zylindrischem Innenraum (12) ein abgedichteter Kolben (19) längsverschiebbar geführt ist, der mit einem sich durch den Längsschlitz (16) hindurch erstreckenden Kraftabnahmeansatz (24) verbunden ist, an dem außerhalb des Gehäuses (11) mindestens ein Bremselement (33, 45) angeordnet ist, dadurch gekennzeichnet, daß das Bremselement (33, 45) in Richtung auf die Oberfläche des Gehäuses (11) bewegbar und mit einer Bremsfläche (37) gegen die Außenseite des Gehäuses (11) anpreßbar ausgebildet ist.

2. Druckmittelzylinder nach Anspruch 1, dadurch gekennzeichnet, daß das Bremselement (33, 45) unter Federwirkung insbesondere von Tellerfedern (38) anpressbar und unter dem Einfluß eines Druckmittels, vorzugsweise des den Kolben (19) antreibenden Druckmittels, lösbar ist.

3. Druckmittelzylinder nach einem der vorhergehenden Ansprüche, dadurch gekennzeichnet, daß das Druckmittel durch das Innere des Kolbens (19) zur Lösung des Bremselementes (33,45) geführt ist.

4. Druckmittelzylinder nach einem der vorhergehenden Ansprüche, dadurch gekennzeichnet, daß zur Betätigung bzw. Lösung des Bremselementes (33,45) ein Bremskolben (27, 53) angeordnet ist.

5. Druckmittelzylinder nach Anspruch 4, dadurch gekennzeichnet, daß der Bremskolben (27) mit einem bewegbaren vorzugsweise rollengeführten Keil (29) verbunden ist, der mit einer Fläche (39) an einem Element, insbesondere einer drehbar gelagerten Walze (40), des Bremselementes (33, 45) zu dessen Bewegung angreift.

6. Druckmittelzylinder nach einem der vorhergehenden Ansprüche, dadurch gekennzeichnet, daß die Bremsfläche - (37) des Bremselementes (33, 45) und/oder das Bremselement (45) etwa radial bezüglich des Gehäuses (11) bzw. Kolbens (19) bewegbar ist.

7. Druckmittelzylinder nach einem der vorhergehenden Ansprüche, dadurch gekennzeichnet, daß das Bremselement - (33) schwenkbar an dem Ansatz (24) gelagert ist.

8. Druckmittelzylinder nach einem der vorhergehenden Ansprüche, dadurch gekennzeichnet, daß die Bremsfläche - (37) an einem an dem Gehäuse (11, 11') vorzugsweise auswechselbar befestigten Band angreift.

9. Druckmittelzylinder nach einem der vorhergehenden Ansprüche, dadurch gekennzeichnet, daß die Bremsfläche - (37) an einem den Längsschlitz (16) von außen abdichtenden Dichtband (18) angreift.

10. Druckmittelzylinder nach einem der vorhergehenden Ansprüche, dadurch gekennzeichnet, daß das Bremselement - (33, 45) im Bereich eines Endes des Kraftabnahmeansatzes (24) und/oder die Bremsfläche (37) im Bereich des verbreiteten Endbereiches (20) des Kolbens (19) angeordnet ist, und vorzugsweise zwei symmetrisch ausgebildete Bremselemente (33, 45) in symmetrischer Anordnung vorhanden sind.

11. Druckmittelzylinder nach einem der vorhergehenden Ansprüche, dadurch gekennzeichnet, daß das Bremselement - (45) einen mit einem Bremsbelag (68) versehenen Bremsbalken (66) aufweist, der über ein Zugelement mit dem vorzugsweise etwa radial verschiebbaren Bremskolben (53) verbunden ist.

12. Druckmittelzylinder nach einem der vorhergehenden Ansprüche, dadurch gekennzeichnet, daß das Bremselement - (33, 45) an einem mit dem Kraftabnahmeansatz verbindbaren getrennten Bauteil angeordnet ist.

13. Druckmittelzylinder nach einem der vorhergehenden Ansprüche, dadurch gekennzeichnet, daß bei einem Gehäuse (11') mit zwei Längsschlitzen (16) das Bremselement (45) im Bereich zwischen diesen am Gehäuse (11') oder an einem an diesem befestigten Band angreift.

II → ‖·

40
33
35
30
31
32
38
36
37

29  27  34  26  28  24  25  34

39  30

23

22

21

20

16

13

18

17

15

14

11  19

12

34  41  33

35

0 190 760

II → ‖·

## FIG. 1

## FIG. 2

FIG. 3

0 190 760

## FIG.4

## FIG.5

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| P,X | DE-U-8 511 577 (HERION)<br><br>* Insgesamt *<br><br>--- | 1-4,6, 8,10, 11 | F 15 B 15/08<br>F 15 B 15/26 |
| X | EP-A-0 029 188 (P-H-MATIC)<br><br>* Seite 8, Zeilen 10-24 *<br><br>--- | 1,2,4, 6,10 | |
| A | EP-A-0 104 364 (KNORR)<br><br>----- | | |

| RECHERCHIERTE SACHGEBIETE (Int Cl 4) |
|---|
| F 15 B |

Der vorliegende Recherchenbericht wurde für alle Patentansprüche erstellt.

| Recherchenort | Abschlußdatum der Recherche | Prüfer |
|---|---|---|
| DEN HAAG | 15-05-1986 | KNOPS J. |